# EUROPÄISCHE PATENTSCHRIFT

(11) **EP 3 298 242 B1**
(45) Veröffentlichungstag und Bekanntmachung des Hinweises auf die Patenterteilung: **06.11.2019**
(21) Anmeldenummer: 16734619.6
(22) Anmeldetag: 30.06.2016
(51) Int. Cl.: F01D 5/18

(54) **SCHAUFEL FÜR EINE STRÖMUNGSKRAFTMASCHINE UND VERFAHREN ZU DEREN HERSTELLUNG**
BLADE FOR A TURBO ENGINE AND METHOD FOR MANUFACTURING SAME
AUBE POUR UNE TURBOMACHINE ET SON PROCÉDÉ DE FABRICATION

(30) Priorität: 13.07.2015 DE 102015213090
(43) Veröffentlichungstag der Anmeldung: 28.03.2018
(73) Patentinhaber: Siemens Aktiengesellschaft, 80333 München (DE)
(72) Erfinder: KIENER, Christoph, 81369 München (DE); KÜSTERS, Yves, 10829 Berlin (DE)
(86) Internationale Anmeldenummer: PCT/EP2016/065243
(87) Internationale Veröffentlichungsnummer: WO 2017/009051

(56) Entgegenhaltungen:
- EP-A2- 1 995 411
- EP-A2- 2 653 655
- DE-A1-102009 048 665

## Beschreibung

Die Erfindung betrifft eine Schaufel für eine Strömungskraftmaschine, aufweisend einen Innenraum, der von einer die Oberfläche der Schaufel bildenden Wandstruktur umgeben ist. In dieser Wandstruktur sind Öffnungen vorgesehen, die die Oberfläche der Schaufel mit dem Innenraum verbinden. Außerdem betrifft die Erfindung ein Verfahren zum additiven Herstellen eines Bauteils.

Schaufeln für Strömungskraftmaschinen der eingangs angegebenen Art sowie Verfahren zum additiven Herstellen solcher Schaufeln sind bekannt. Die genannten Schaufeln können beispielsweise in Gasturbinen oder Flugzeugturbinen zum Einsatz kommen. Ein Einsatz kommt sowohl als Leitschaufel wie auch als Laufschaufel in Frage.

Eine Turbinenschaufel, die mit einem additiven Herstellungsverfahren hergestellt wurde, ist beispielsweise in der DE 10 2009 048 665 A1 beschrieben. Danach kann eine Turbinenschaufel mit einem dreidimensional sich ausdehnenden Gitter hergestellt werden, welches einen Innenraum der Turbinenschaufel ausfüllt. Dieser Innenraum ist von einer Wandung umgeben, wobei in dieser Wandung Löcher vorgesehen werden können, die den Innenraum mit einer Oberfläche der Turbinenschaufel verbinden. Wie beispielsweise der DE 10 2009 033 753 A1 zu entnehmen ist, können solche Öffnungen beispielsweise Verwendung finden, um Kühlgas aus dem Innenraum der Schaufel zu ihrer Oberfläche zu transportieren. Auf diesem Weg ist eine Filmkühlung der Schaufel mit dem Kühlgas möglich.

Gemäß der US 2008/0290215 A1 ist beschrieben, dass mittels additiver Herstellungsverfahren der Innenraum der Schaufel mit einer Stützstruktur in Form von Streben versehen werden kann. Diese können beanspruchungsgerecht gestaltet werden, so dass eine maximale Versteifung der Schaufel mit geringstmöglichem Materialaufwand ermöglicht wird. Gemäß der WO 2008/046386 A1 wird beschrieben, wie eine Schaufel mitsamt der stützenden Innenstruktur in einem Arbeitsgang hergestellt werden kann, indem sowohl die Wandungen der Schaufel als auch die stützenden Innenstrukturen lagenweise mit einem additiven Fertigungsverfahren, wie z. B. dem Laserschmelzen, unter Ausnutzung eines CAD-Modells hergestellt werden können.

Gemäß der EP 2 653 655 A2 ist eine Schaufel für Turbinen offenbart, welche zwecks Filmkühlung ihrer Oberfläche Kanäle für die Durchleitung von Kühlluft aufweist. Diese Kanäle sind durch eine Schicht auf der Turbinenschaufel gebildet, wobei in dieser Schicht kein definierter Verlauf der Kühlkanäle ausgebildet ist. Vielmehr verlaufen die Kanäle in einer unregelmäßigen Geometrie, d. h., dass diese beispielsweise durch Poren ausgebildet sind. Hierdurch lässt sich ein diffuser Transport der Kühlluft erreichen, die dann an der Oberfläche der Turbinenschaufel einen Film ausbildet.

Die Aufgabe der Erfindung besteht darin, eine Schaufel für Strömungskraftmaschinen, insbesondere für Gasturbinen oder Flugzeugturbinen, anzugeben, die eine verbesserte Filmkühlung der Schaufel gewährleistet. Weiterhin ist es Aufgabe der Erfindung ein Verfahren zur additiven Herstellung einer solchen Schaufel anzugeben.

Diese Aufgabe wird mit der eingangs angegebenen Schaufel erfindungsgemäß dadurch gelöst, dass die Öffnungen in der Wandstruktur durch eine Vielzahl von Mikrokanälen gebildet werden und über einen Flächenbereich der Oberfläche verteilt sind. Unter Mikrokanälen sollen im Zusammenhang dieser Erfindung Kanäle verstanden werden, deren Durchmesser < 1 mm beträgt bzw. deren Querschnittsfläche 0,8 mm² nicht überschreitet, soweit die Kanäle keinen Kreisquerschnitt aufweisen. Bevorzugt können die Mikrokanäle einen Durchmesser von < 0,1 mm aufweisen bzw. eine Querschnittsfläche von weniger als 0,08 mm².

Dadurch, dass die Öffnungen in der Wandstruktur als Mikrokanäle ausgeführt sind, kann zur Verwirklichung des erforderlichen Gesamtquerschnitts für alle Kühlgasleitungen eine größere Anzahl von Mikrokanälen vorgesehen werden. Dies wiederum hat vorteilhaft zur Folge, dass die größere Vielzahl von Mikrokanälen über einen Flächenbereich, d. h. einen Bereich mit einer zweidimensionalen Flächenausdehnung, verteilt werden kann, wobei dieser Flächenbereich einen Teilbereich der gesamten Schaufeloberfläche oder den gesamten Bereich der umströmten Schaufeloberfläche einnehmen kann. Die Mikrokanäle können in einem regelmäßigen Muster oder auch unregelmäßig über den Flächenbereich verteilt sein. Vorteilhaft ist es, die Mikrokanäle in einem Array oder einem Raster anzuordnen, wobei die durch das Raster definierten Rasterzellen als kleinste Einheit des Rasters beliebig geformt sein können. Beispielsweise ist es möglich, die Mikrokanäle in einem quadratischen oder rechteckigen Raster anzuordnen. Die Rasterzellen können aber auch wabenförmig sein. Außerdem können die Rasterzellen rautenförmig oder drachenförmig sein. Dabei ist es auch möglich, dass sich die Rasterzellen in ihrer Geometrie über den Flächenbereich hinweg verändern. Beispielsweise können als viereckige Rasterzellen Drachen vorgesehen werden, welche sich von der Anströmkante der Turbinenschaufel zur Abströmkante der Turbinenschaufel immer weiter strecken, so dass die Dichte der Mikrokanäle pro Flächeneinheit an der Anströmkante größer ist, als an der Abströmkante. Hierdurch lässt sich vorteilhaft die ausströmende Kühlgasmenge in unterschiedlichen Bereichen der Oberfläche der Schaufel variieren.

Durch eine größere Anzahl an Mikrokanälen im Vergleich zu Schaufeln mit Kanälen herkömmlicher Abmessungen kann vorteilhaft gewährleistet werden, dass ein geschlossener Kühlfilm auf der Schaufeloberfläche zuverlässiger erzeugt werden kann. Auch ist es möglich, ein größeres Filmkühlungsvolumen pro Zeiteinheit zuzuführen, so dass die Kühlleistung auf der Schaufeloberfläche vergrößert werden kann. Hierdurch ist vorteilhaft ein zuverlässigerer Betrieb der Turbine möglich, in die die erfindungsgemäßen Turbinenschaufeln eingebaut werden. Dadurch lassen sich höhere Betriebstemperaturen der Turbinenschaufel verwirklichen oder bei gleichbleibender Betriebstemperatur können Werkstoffe ausgewählt werden, die weniger temperaturbeständig sind. Eine andere Möglichkeit besteht darin, auf eine Wärmeschutzbeschichtung der Schaufel (auch Thermal Barrier Coating, kurz TBC genannt) zu verzichten. Werden Schaufeln gleicher Temperaturbeständigkeit und/oder mit einer TBC verwendet, so steigt vorteilhaft deren Lebensdauer. Mit den erfindungsgemäßen Schaufeln lässt sich daher alternativ der Wirkungsgrad einer erfindungsgemäß ausgestatteten Turbine vergrößern, da dieser bei steigenden Betriebstemperaturen verbessert wird. Alternativ lassen sich Turbinenschaufeln wirtschaftlicher herstellen und betreiben, ohne dass hierbei ein Verlust an Wirkungsgrad hingenommen werden muss.

Gemäß der Erfindung ist vorgesehen, dass die Mikrokanäle sich jeweils einzeln von dem Innenraum hin zur Oberfläche erstrecken. Dies bedeutet, dass jeder der Mikrokanäle einen definierten Weg durch die Wandsruktur nimmt, die die Oberfläche der Schaufel von dem Innenraum trennt. Über diese Wegstrecke kann dem strömenden Kühlgas vorteilhaft eine geradlinige Richtung gegeben werden, wobei die Richtung in Abhängigkeit der Schaufelgeometrie auf eine optimale Kühlleistung hin ausgelegt werden kann.

Erfindungsgemäß wird die eingangs angegebene Aufgabe insbesondere durch ein Verfahren zum additiven Herstellen gelöst, wonach die Schaufel inklusive der Mikrokanäle in einem Arbeitsgang erzeugt werden kann, so dass ein Nachbearbeitungsschritt zur Erzeugung der Mikrokanäle nicht erforderlich ist. Dieses Verfahren ermöglicht es daher vorteilhaft, auch eine Schaufel mit sehr vielen Kühlgasöffnungen in Form von Mikrokanälen mit vertretbarem Aufwand herzustellen, da die Geometrie eines additiv hergestellten Bauteils aufgrund des lageweisen Aufbaus des Bauteils fast beliebig komplex gewählt werden kann, ohne den Fertigungsaufwand hierdurch zu vergrößern.

Gemäß einer anderen Ausgestaltung der erfindungsgemäßen Schaufel ist vorgesehen, dass die Mikrokanäle in Bezug auf eine Normale n der Oberfläche mit variablen Anstellwinkeln ϕ, gemessen im Schaufelquerschnitt, und/oder mit variablen Anstellwinkeln ϑ gemessen in Längsrichtung der Schaufel, ausgerichtet sind. Während die Normale n auf der Oberfläche der Schaufel immer senkrecht steht, kann es vorteilhaft sein, wenn die Mikrokanäle nicht genau als Verlängerung dieser Normalen ausgerichtet sind, sondern einen Anstellwinkel aufweisen, der als Winkel zwischen der Normalen n und der Austrittsrichtung des Mikrokanals an der Oberfläche der Schaufel gemessen wird. Bei einer Variation des Anstellwinkels ϕ, der in einer Querschnittsebene der Schaufel gemessen wird, ist es beispielsweise vorteilhaft, dass die Mikrokanäle einen umso kleineren Winkel ϕ aufweisen, je größer der Auftreffwinkel β einer Strömung der Strömungskraftmaschine auf die Oberfläche der Schaufel ist. Der Auftreffwinkel β der Strömung kann höchstens 90° betragen. Dann trifft die Strömung senkrecht auf die Schaufel, was näherungsweise an der Anströmkante der Schaufel der Fall ist. In diesem Bereich ist daher die thermische Belastung des Schaufelmaterials am größten, da die durch die Strömung mitgeführten Teilchen in vergleichsweise großer Zahl auf die Schaufeloberfläche prallen. Außerdem wird ein Kühlfilm in diesem Bereich am ehesten durchbrochen, da die kinetische Energie der Teilchen senkrecht zur Erstreckung des Kühlfilms ausgerichtet ist. Diesen Effekten kann am besten entgegengewirkt werden, wenn die Mikrokanäle ebenfalls senkrecht zur Oberfläche ausgerichtet sind, d. h. dass der Winkel ϕ gleich oder nahe 0 ist. Die kinetische Energie der Kühlgasteilchen ist dann der kinetischen Energie der Strömungsteilchen genau entgegengerichtet und erzeugt damit einen optimalen Widerstand gegen ein Durchbrechen des Kühlfilms.

Anders verhält es sich an der Saugseite und der Druckseite der Schaufel, wo die Strömung an der Oberfläche der Schaufel entlang streicht. Hier ist eine Ausrichtung der Mikrokanäle mit einem großen Winkel ϕ vorteilhaft, derart, dass das Kühlgas aus den Mikrokanälen in Richtung der Strömung an der Schaufel austritt. Hierdurch wird das Kühlgas durch die Strömung laminar an die Oberfläche der Schaufel gedrückt, wodurch ein Film von Kühlgas entsteht.

Eine Variation des Anstellwinkels ϑ, der sich in einem Längsschnitt der Schaufel messen lässt, ermöglicht eine Filmkühlung auch an den Stellen der Schaufel, die aufgrund der Geometrie der Schaufel schwer zu erreichen sind. So muss beispielsweise aufgrund einer Mindestwandstärke der Schaufelwand der Innenraum der Schaufel einen gewissen Abstand zur Schaufeloberfläche einhalten. An der radial außenliegenden Schaufelkante können die Mikrokanäle durch einen zur Schaufelkante hin geöffneten Winkel ϑ trotz eines Abstands des Innenraums von der radial äußeren Kante noch erreicht werden, so dass vorteilhaft auch in diesem Bereich der Kühlgasfilm nicht abreißt.

Gemäß einer anderen Ausgestaltung der Erfindung ist vorgesehen, dass die Wandstärke der Wandstruktur variabel ist. Auch mit dieser Maßnahme kann vorteilhaft erreicht werden, dass das an der Schaufeloberfläche austretende Kühlgas pro Flächeneinheit unterschiedlich groß ist. Je dünner nämlich die Wandstruktur ausgebildet ist, desto geringer ist auch der durch sie erzeugte Strömungswiderstand. Da es sich bei den Kanälen um Mikrokanäle handelt, steigt der Strömungswiderstand bei zunehmender Wandstärke der Wandstruktur nämlich schnell an. Daher kann dies vorteilhaft als Konstruktionskriterium verwendet werden, um die austretende Kühlgasmenge direkt zu beeinflussen. Dabei müssen selbstverständlich die mechanisch erforderlichen Mindestwandstärken eingehalten werden, die sich aus den mechanischen Belastungen der Schaufel ergeben.

Beispielsweise kann vorteilhaft vorgesehen werden, dass die Wandstärke der Wandstruktur umso dünner ist, je größer der Auftreffwinkel einer Strömung in der Strömungskraftmaschine auf die Oberfläche der Schaufel ist. Wie bereits beschrieben, ist die thermische Beanspruchung der Schaufel nämlich in den Bereichen mit größerem Auftreffwinkel der Strömung auf die Oberfläche größer, so dass in diesem Bereich eine Wandstruktur mit einer entsprechend dünneren Wandstärke zu einem größeren Volumenstrom an Kühlgas pro Mikrokanal führt. Ein größerer Volumenstrom an Kühlgas in diesem Oberflächenbereich der Schaufel führt zudem dazu, dass der sich ausbildende Film stabiler wird und daher durch die auftreffende Strömung nicht so leicht verdrängt werden kann.

Gemäß einer wieder anderen Ausgestaltung der Erfindung kann vorgesehen werden, dass der Abstand a der Öffnungen zu benachbarten Öffnungen in dem Flächenbereich variabel ist. Auch dies ist eine konstruktive Maßnahme, mit der die ausgestoßene Kühlgasmenge pro Flächeneinheit der Oberfläche der Turbinenschaufel beeinflusst werden kann. Je geringer die Abstände a zu benachbarten Mikrokanälen gewählt wird, desto größer ist die zur Verfügung stehende Kühlgasmenge. Dieser Effekt kann, wie bereits beschrieben, beispielsweise dazu genutzt werden, um im Bereich der Anströmkante der Schaufel eine größere Kühlgasmenge zur Verfügung zu stellen.

Die oben beschriebenen konstruktiven Maßnahmen, mit denen die Kühlgasmenge pro Flächeneinheit der Schaufeloberfläche beeinflusst werden können, können selbstverständlich auch untereinander kombiniert werden. Hierdurch ist es beispielsweise möglich, in Bereichen, wo sich aus konstruktiven Gründen die Wandstärke der Wandstruktur nicht weiter verringern lässt, beispielsweise durch Vergrößerung der Dichte der Mikrokanäle (d. h. durch Verringerung des Abstands a untereinander) eine weitere Steigerung der ausgestoßenen Kühlgasmenge zu erreichen.

Gemäß einer besonderen Ausgestaltung der Erfindung ist vorgesehen, dass im Innenraum der Schaufel eine Stützstruktur vorgesehen ist, die mechanisch an die Wandstruktur angebunden ist und die ein Kanalsystem aufweist, durch welches die an die Stützstruktur angrenzenden Mikrokanäle zugänglich sind. Dabei ist sichergestellt, dass die Kanalstruktur einen geringeren Strömungswiderstand aufweist, als die an die Stützstruktur angrenzenden Mikrokanäle. Die Stützstruktur führt vorteilhaft zu einer mechanischen Versteifung der Schaufel. Dies bewirkt, dass die Wandstruktur dünnwandiger ausgeführt werden kann. Je dünnwandiger die Wandstruktur sein kann, desto größer ist aus den oben angegebenen Gründen die maximal zuführbare Kühlgasmenge, was die Kühlleistung vorteilhaft vergrößert. Dabei muss allerdings sichergestellt sein, dass die zuführbare Kühlgasmenge nicht durch den Strömungswiderstand der Stützstruktur limitiert wird. Deswegen muss das durch die Stützstruktur gebildete Kanalsystem einen hinreichend geringen Strömungswiderstand aufweisen.

Durch eine Versteifung der Schaufel durch die Stützstruktur im Inneren wird zusätzlich der Vorteil erreicht, dass die Schaufel mit einem geringeren Materialaufwand hergestellt werden kann. Hierdurch verringert sich zum einen die Gesamtmasse der beweglichen Teile in der Turbine, was sich positiv auf die mechanischen Anforderungen an die Turbine auswirkt. Beispielsweise verringern sich die Lagerkräfte für den Turbinenläufer. Ein anderer positiver Aspekt liegt darin, dass die Schaufel aufgrund ihrer geringeren Masse auch eine geringere Wärmekapazität aufweist. Die Schaufel kann damit weniger Wärme aufnehmen und verformt sich aufgrund der effektiven Kühlung weniger. Zuletzt werden die aufgrund der Kriecheffekte entstehenden Verformungen der Schaufel wegen ihrer geringeren Masse verringert, was vorteilhaft die Kriechbeständigkeit der Schaufel vergrößert und zu längeren Standzeiten führt.

Vorteilhaft kann die Stützstruktur durch ein dreidimensionales Gitter gebildet werden. Das Gitter besteht aus Streben, die jeweils in Knoten zusammenlaufen. Vorteilhaft lässt sich hierdurch ein Fachwerk erzeugen, welches in Bezug auf seine Masse einen optimalen Versteifungseffekt bewirkt. Hierdurch kann auch sichergestellt werden, dass die Stützstruktur einen geringen Strömungswiderstand aufweist, um eine genügende Versorgung der Mikrokanäle mit Kühlgas zu gewährleisten.

Weiterhin kann vorteilhaft vorgesehen werden, dass die Stützstruktur in ihrem Inneren einen Versorgungskanal für Kühlgas aufweist, wobei der Versorgungskanal einen geringeren Strömungswiderstand aufweist, als die Stützstruktur. Hierdurch kann vorteilhaft sichergestellt werden, dass das Kühlgas über den Versorgungskanal allen Bereichen der Stützstruktur in gleichem Maße zugeführt werden kann, so dass eine gleichmäßige Versorgung der Mikrokanäle mit Kühlgas gewährleistet ist. Eine weitere Ausbildung der Erfindung sieht vor, dass der Versorgungskanal von der Stützstruktur durch eine Siebstruktur abgetrennt ist. Die Siebstruktur erfüllt vorteilhaft den Zweck, dass diese Partikel aus dem Kühlgas zurückhält, so dass diese nicht über die Stützstruktur zu den Mikrokanälen gelangt. Hierdurch kann einer Verstopfungsgefahr der Mikrokanäle entgegengewirkt werden. Eine Verstopfung der Mikrokanäle hätte nämlich zur Folge, dass in den Oberflächenbereichen der Schaufel, wo Kühlgaskanäle verstopft sind, der Kühlgasfilm zusammenbrechen könnte und so eine thermische Schädigung der Schaufel erfolgen könnte.

Vorteilhaft ist es, wenn die Sieböffnungen in der Siebstruktur einen Querschnitt aufweisen, der höchstens so groß ist, wie derjenige der Mikrokanäle. Hierdurch kann sichergestellt werden, dass die Siebstruktur Partikel in dem Kühlgas auf jeden Fall zurückhält, die groß genug sind, dass diese auch die Kühlkanäle verstopfen würden. Zu bemerken ist, dass die Verstopfungsgefahr der Siebstruktur selbst im Vergleich zu den Mikrokanälen geringer ist, da das Kühlgas in dem Versorgungskanal an den Sieböffnungen vorbeistreicht und nur ein geringes Teilvolumen in die Sieböffnungen hinein gelangt. Auch ist eine Verstopfung einzelner Sieböffnungen im Vergleich zu einer Verstopfung von Mikrokanälen weniger schädlich, da verstopfte Sieböffnungen von dem Kühlgas umgangen werden, die sich in der hinter der Siebstruktur liegenden Stützstruktur dennoch auf alle Mikrokanäle verteilen kann. Vorteilhaft ist daher, wenn der Gesamtquerschnitt der Sieböffnungen mindestens so groß ist, wie der Gesamtquerschnitt der Mikrokanäle. Dies bewirkt, dass ein Volumenstrom an Kühlgas durch die Sieböffnungen genügend groß ist, damit die Mikrokanäle mit genügend Kühlgas versorgt werden können. Hierbei ist zu berücksichtigen, dass die Siebstruktur eine geringere Wandstärke aufweisen kann, als die Wandstruktur der Schaufel, so dass überdies ein Druckverlust an den Sieböffnungen geringer ausfält, als an den Mikrokanälen. Selbst wenn einige der Sieböffnungen verstopft sind, bleibt daher noch ein genügend großer Volumenstrom des Kühlgases erhalten, damit die Mikrokanäle mit Kühlgas versorgt werden können.

Gemäß einer besonderen Ausgestaltung der Erfindung ist vorgesehen, dass der Versorgungskanal mit einer Auslassöffnung verbunden ist, der zur Oberfläche der Schaufel führt. Diese Auslassöffnung ermöglicht es vorteilhaft, dass Partikel, die in den Versorgungskanal geraten sind, durch die Auslassöffnung aus dem Innenraum der Schaufel heraus transportiert werden können. Die Auslassöffnung weist daher einen größeren Querschnitt auf, als die Mikrokanäle, damit auch größere Partikel aus dem Innenraum ausgetragen werden können. Die Auslassöffnung kann vorteilhaft in der Oberfläche der Schaufel auf einer Saugseite der Schaufel oder in der stromabwärtigen Kante der Schaufel (Abströmkante) liegen. Dies bewirkt, dass die Auslassöffnung mit einem Unterdruck an der Schaufeloberfläche beaufschlagt wird, wodurch ein Volumenstrom des Kühlgases aus der Schaufel heraus sichergestellt ist. Die Partikel werden also sozusagen abgesaugt.

Gemäß einer besonderen Ausgestaltung der Erfindung kann vorgesehen werden, dass der Versorgungskanal im Querschnitt gesehen eine gewellte oder mäandernde Kontur aufweist. Hierdurch kann vorteilhaft erreicht werden, dass der Umfang des betreffenden Querschnitts im Verhältnis zur Querschnittsfläche groß ist, so dass eine größere Außenfläche für die Siebstruktur zur Verfügung steht. Hierdurch lassen sich in der Siebstruktur mehr Sieböffnungen unterbringen, was zur Erreichung der bereits erläuterten Anforderung eines genügend geringen Druckabfalls über der Siebstruktur führt. Bei den oben beschriebenen Strukturen, also der Stützstruktur, der Wandstruktur und der Siebstruktur, muss es sich nicht um diskrete Strukturen handeln, die diskrete Übergänge zueinander aufweisen. Gemäß einer vorteilhaften Ausgestaltung können die Übergänge von der Stützstruktur in die Wandstruktur und/oder in die Siebstruktur auch fließend ausgebildet sein. Mit anderen Worten gibt es keine Querschnittssprünge in den durch diese Strukturen gebildeten Kanalstrukturen. Dies hat den Vorteil, dass die Kühlgasströmung ungestört und damit mit einem geringeren Druckverlust transportiert werden kann. Außerdem können die wirkenden mechanischen Kräfte ungestörter zwischen der Stützstruktur, der Wandstruktur und der Siebstruktur geleitet werden. Dies verbessert vorteilhaft die mechanische Stabilität der Schaufel.

Weiterhin kann vorteilhaft vorgesehen werden, dass sich der Querschnitt des Versorgungskanals von einem Schaufelfuß ausgehend nach radial außen vergrößert Dies verbessert vorteilhaft einen Austrag von Partikeln durch den Auslassöffnung, da sich der Druck des Kühlgases in den Versorgungskanal nach radial außen verringert und damit den Transport von Partikeln unterstützt.

Vorteilhaft können in dem Versorgungskanal Verstrebungen vorhanden sein. Diese Verstrebungen führen zu einer weiteren Stabilisierung der Schaufel, da die gegenüberliegenden Wände des Versorgungskanals sich gegenseitig stützen. Auch die Verstrebungen im Versorgungskanal können mit einem fließenden Übergang zur Siebstruktur oder bei Fehlen der Siebstruktur mit einem fließenden Übergang zur Stützstruktur ausgebildet sein.

Besonders vorteilhaft kann in dem Versorgungskanal ein Zyklonabscheider für das Kühlgas integriert sein. Dieser bewirkt, dass das Kühlgas vor einem Passieren der Siebstruktur durch den Zyklonabscheider geleitet und bereits von einem Teil der mitgeführten Partikel befreit wird. Diese im Zyklonabscheider abgeschiedenen Partikel können durch einen gesonderten Auslasskanal aus der Schaufel ausgetragen werden.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Es zeigen:
- Figur 1: ein Ausführungsbeispiel der erfindungsgemäßen Schaufel als Seitenansicht, teilweise aufgeschnitten,
- Figur 2 bis 6: verschiedene Querschnitte der Schaufel gemäß Figur 1,
- Figur 7: detailliert den Aufbau der Schaufel gemäß Figur 1 mit Wandstruktur, Stützstruktur und Siebstruktur geschnitten und
- Figur 8: ein Detail eines anderen Ausführungsbeispiels der erfindungsmäßen Schaufel mit Wandstruktur, Stützstruktur und Siebstruktur als Schnitt.

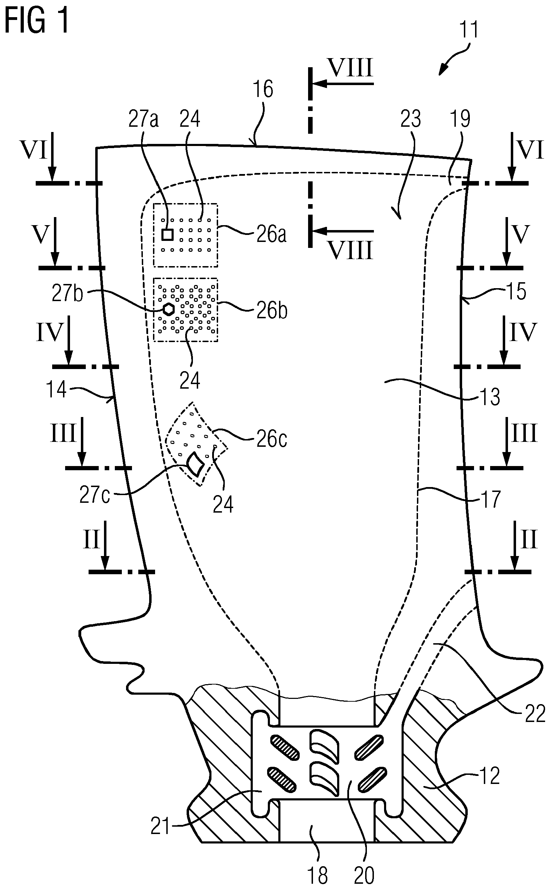

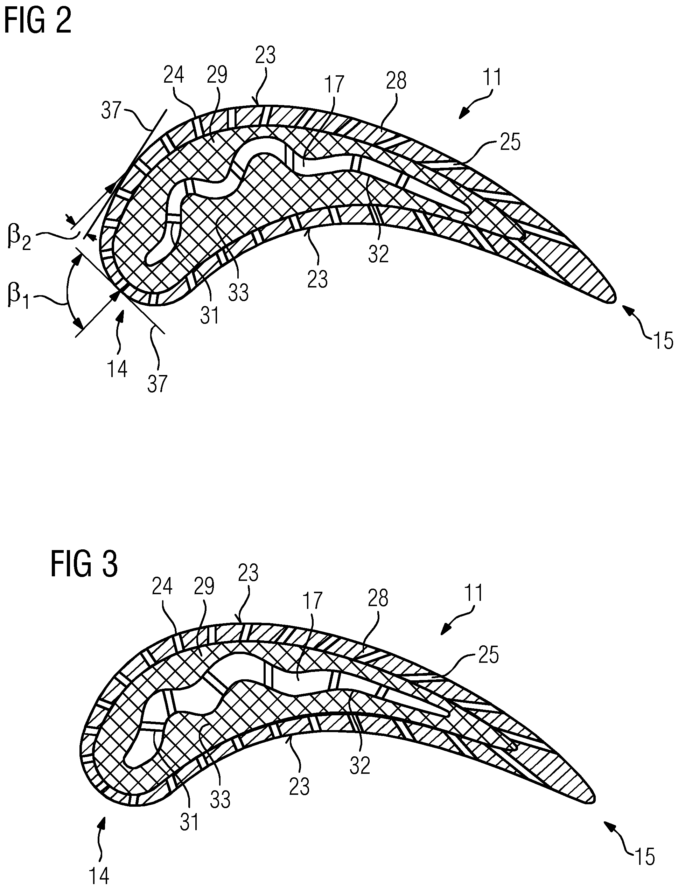

Eine Schaufel 11 gemäß Figur 1 weist einen Schaufelfuß 12 auf, mit dem dieser in einen nicht dargestellten Läufer einer Turbine eingesetzt werden kann. Von dem Schaufelfuß 12 erstreckt sich ein Schaufelblatt 13 nach radial außen. Das Schaufelblatt 13 weist eine Anströmkante 14 und eine Abströmkante 15 auf, wobei das durch das Schaufelblatt realisierte Profil in den Figuren 2 bis 6 zu erkennen ist. Die Ebenen der in den Figuren 2 bis 6 dargestellten Profile sind in Figur 1 eingezeichnet.

Vom Schaufelfuß 12 bis zu einer radial äußeren Kante 16 des Schaufelblatts 13 erstreckt sich ein Versorgungskanal 17 für ein Kühlgas. Dieser ist im nicht aufgeschnittenen Bereich der Schaufel 11 gestrichelt dargestellt. Zu erkennen ist, dass sich der Versorgungskanal 17 von einer Einlassöffnung 18 im Schaufelfuß bis zu einer Auslassöffnung 19 nahe der radial äußeren Kante 16 erstreckt. Die Auslassöffnung 19 befindet sich genau in der Abströmkante 15. In der Einlassöffnung 18 des Versorgungskanals 17 befindet sich außerdem ein Zyklonabscheider 20, mit dessen Hilfe Partikel aus dem Kühlgas zunächst in einen Ringraum 21, der den Versorgungskanal 17 umgibt, und dann durch einen Auslasskanal 22 aus der Schaufel 11 transportiert werden.

In Figur 1 ist außerdem dargestellt, dass in einer Oberfläche 23 der Schaufel 11 Öffnungen 24 für Kühlgas vorgesehen werden können. Diese werden durch Mikrokanäle 25 (vgl. Figur 2) gebildet, so dass der Querschnitt der Öffnungen 24 kleiner als 0,8 mm² beträgt. In Figur 1 ist beispielhaft dargestellt, wie die Öffnungen 24 über Flächenbereiche 26a, 26b, 26c verteilt sein können. Diese Flächenbereiche definieren jeweils ein Raster der Öffnungen 24, die in dem Flächenbereich 26a beispielsweise in einem quadratischen Raster angeordnet sind. Eine Rasterzelle 27a ist somit quadratisch, könnte aber auch rechteckig sein (nicht dargestellt). In dem Flächenbereich 26b sind die Öffnungen wabenförmig angeordnet. Die Rasterzelle 27b ist daher die eines regelmäßigen Sechsecks. In dem Flächenbereich 26c liegen die Öffnungen auf gekrümmten Bahnen, so dass sich drachenförmige Rasterzellen 27c ergeben. Durch diese Maßnahme ist es möglich, dass die Dichte an Öffnungen nahe der Anströmkante 14 größer ist, als an der Abströmkante 15.

In Figur 2 ist der Schnitt II-II gemäß Figur 1 zu erkennen. Der Aufbau der Schaufel lässt sich anhand des Schnitts besonders einfach beschreiben. Die Oberfläche 23 der Schaufel 11 wird durch eine Wandstruktur 28 ausgebildet. Diese Wandstruktur weist die Mikrokanäle 25 auf, die einer besseren Übersichtlichkeit wegen mit zu großem Querschnitt dargestellt sind. Weiterhin schließt die Wandstruktur 28 einen Innenraum 29 ein, in dem die Mikrokanäle 25 münden.

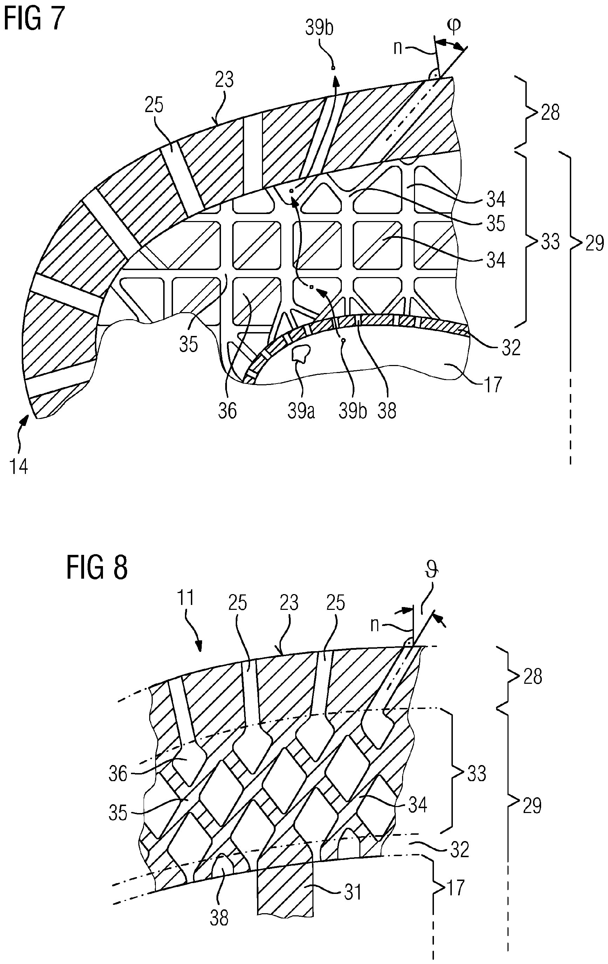

Der Innenraum 29 ist folgendermaßen aufgebaut: In der Mitte des durch den Innenraum 29 definierten Querschnitts ist der Versorgungskanal 17 ausgebildet. Dieser wird selbst durch Verstrebungen 31 stabilisiert, die den Versorgungskanal 17 überbrücken und von dem senkrecht zur Zeichenebene strömenden Kühlgas umströmt werden. Dieser Strömung setzen diese Verstrebungen 31 nur einen geringen Strömungswiderstand entgegen. Der Versorgungskanal wird von einer Siebstruktur 32 begrenzt, die in den Figuren 8 und 9 in ihrer Struktur näher beschrieben wird. In Figur 2 ist diese Siebstruktur lediglich durch eine durchgezogene Linie angedeutet. Die Siebstruktur 32 und die Wandstruktur 28 sind über eine Stützstruktur 33 miteinander verbunden, wobei die Stützstruktur 33 in Figur 2 durch eine Kreuzschraffur angedeutet ist. Wie den Figuren 7 und 8 zu entnehmen ist, besteht die Stützstruktur 33 aus einem Streben 34 und Knoten 35 aufweisenden Fachwerk, welches offen ist und daher ein Kanalsystem 36 ausbildet, wobei dieses die Siebstruktur 32 mit der Wandstruktur 28 verbindet.

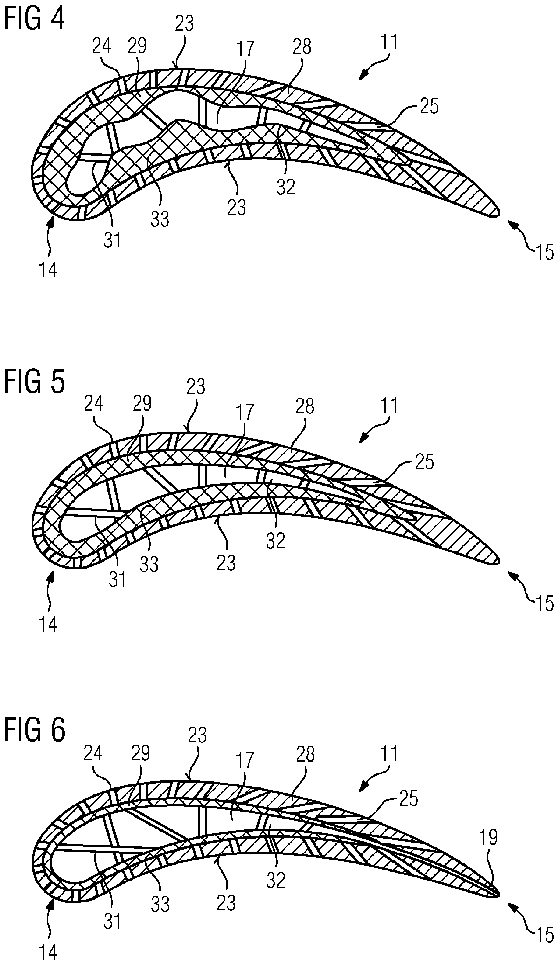

Die Querschnitte III-III gemäß Figur 3, IV-IV gemäß Figur 4, V-V gemäß Figur 5 und VI-VI gemäß Figur 6 sind strukturell genauso aufgebaut, wie der Querschnitt gemäß Figur 2. Lediglich in Figur 6 ist zusätzlich die Auslassöffnung 19 zu erkennen, in die der Versorgungskanal 17 mündet, damit Partikel aus dem Versorgungskanal heraus transportiert werden können.

Ansonsten unterscheiden sich die Querschnitte gemäß den Figuren 2 bis 6 durch ihre unterschiedliche Topologie, die durch die Geometrie des Schaufelblatts 13 gemäß Figur 1 vorgegeben sind. Während der Schaufelquerschnitt gemäß Figur 2 gedrungener ausgebildet ist, ist der Schaufelquerschnitt gemäß Figur 6 gestreckter ausgebildet. Dies orientiert sich an der allgemein bekannten und üblichen Schaufelgeometrie. Die Geometrie des durch die Wandstruktur 28 eingeschlossenen Innenraums 29 ändert sich zwangsläufig mit dem Schaufelquerschnitt, da die Dicke der Wandstruktur 28 konstruktiv vorgegeben ist. Zu erkennen ist in allen Figuren 2 bis 6, dass die Wandstärke der Schaufel an der Anströmseite 14 dünner ausgebildet ist als im weiteren Verlauf der Wandstruktur der Schaufel. Einerseits ist hier die Krümmung der Wandstruktur am stärksten und wird dadurch zusätzlich stabilisiert. Außerdem ist es wünschenswert, dass in diesem Bereich der Strömungswiderstand der Mikrokanäle 25 besonders niedrig ist. Da der Strömungswiderstand von der Länge der Mikrokanäle direkt abhängig ist, führen dünnere Wandstärken der Wandstruktur 28 auch zu einem geringeren Strömungswiderstand.

Der geringere Strömungswiderstand ist erforderlich, da ein Auftreffwinkel β₁, wie in Figur 2 dargestellt, fast senkrecht auf einer an die Oberfläche 23 anliegenden Tangente 37 steht. Ein größerer Volumendurchsatz an Kühlgas schützt somit die besonders gefährdete Anströmseite 14 der Schaufel vor einer Überhitzung.

Im weiteren Schaufelverlauf wird der Winkel, in dem die Strömung auf die Oberfläche 23 der Schaufel 11 auftrifft, immer kleiner, wie man β₂ beispielsweise entnehmen kann. An dieser Stelle der Schaufel legt sich daher das Kühlgas leichter als Film auf die Oberfläche 23, weswegen weniger Kühlgas benötigt wird. Dies wird dadurch gesteuert, dass die Mikrokanäle 25 in diesem Bereich der Wandstruktur länger sind und dadurch einen größeren Strömungswiderstand aufweisen.

Der längere Weg der Mikrokanäle 25 an der letztgenannten Stelle der Wandstruktur 28 kommt aber nicht nur durch eine größere Dicke der Wandstruktur 28 zustande, sondern auch durch einen Anstellwinkel ϕ (vgl. Figur 7) gemessen bezogen auf eine Normale n, die senkrecht auf der Oberfläche 23 der Schaufel 11 steht. Der Anstellwinkel ϕ führt dazu, dass sich bei kleineren Auftreffwinkeln β₂ die Strömung des Kühlgases besser als Film an die Oberfläche 23 anlegt. Im Bereich der Anströmkante 14 ist es dagegen gewünscht, dass das Kühlgas der Anströmung der Schaufel entgegengerichtet ist und auf diesem Wege die Anströmung verlangsamt. Hierdurch wird auch in diesem Bereich die Temperatur an der Oberfläche 23 abgesenkt. Betrachtet man die Figuren 3 bis 6, so wird deutlich, dass diese Überlegung für einen Anstellwinkel ϕ und eine Wandstärke der Wandstruktur genauso berücksichtigt sind, auch wenn die Winkel in diesen Figuren nicht eingezeichnet sind.

Weiterhin wird deutlich, dass der Versorgungskanal 17 gemäß Figur 2 einen langgestreckten welligen oder mäandernden Querschnitt aufweist. In diesem Bereich wird damit die Oberfläche der Siebstruktur 32 vergrößert, so dass der durch die Siebstruktur erzeugte Strömungsverlust verringert werden kann. Vergleicht man die Querschnitte des Versorgungskanals in den Figuren 3 bis 6 so erkennt man, dass der mäandernde Querschnitt des Versorgungskanals immer geringer ausgeprägt ist. Dafür vergrößert sich jedoch die Querschnittsfläche des Versorgungskanals insgesamt, wodurch auch eine größere Fläche für die Siebstruktur zur Verfügung steht.

In Figur 7 lässt sich das Zusammenwirken der Wandstruktur 28, der Stützstruktur 33 und der Siebstruktur 32 genauer erkennen. Hierbei handelt es sich um drei Strukturen, deren Übergang jeweils diskret ist. Die Stützstruktur 33 ist mit ihren Streben 34 direkt auf den Wandflächen der Siebstruktur 32 und der Wandstruktur 28 verankert. Zu erkennen ist, dass die Siebstruktur 32 Sieböffnungen 38 aufweist, die den Versorgungskanal 17 jeweils mit dem durch die Stützstruktur 33 gebildeten Kanalsystem 36 verbinden. Über das Kanalsystem gelangt das Kühlgas dann zu den Mikrokanälen 25, die in der Wandstruktur 28 ausgebildet sind.

Die Sieböffnungen 38 besitzen in Figur 7 einen geringeren Querschnitt als die Mikrokanäle 25. Dadurch ist sichergestellt, dass Partikel 39a aus dem Kühlgas zurückgehalten werden, da diese nicht durch die Sieböffnungen 38 passen. Ein Partikel 39a besitzt eine Größe, bei dem die Gefahr bestehen würde, dass durch das Partikel 39a ein Mikrokanal 25 verstopft wird.

Ein kleineres Partikel 39b passt durch die Sieböffnung 38, wie in Figur 7 angedeutet ist. Doch wird schnell deutlich, dass das Partikel 39b so klein ist, dass es problemlos durch das Kanalsystem 36 und den Mikrokanal 25 transportiert werden kann, ohne letzteren zu verstopfen.

In Figur 8 ist der Schnitt durch eine anders aufgebaute Schaufel 11 gezeigt. In Figur 1 ist der Schnitt VIII-VIII eingezeichnet, um dessen Ausrichtung entlang der Längenausdehnung des Schaufelblatts zu verdeutlichen, auch wenn es sich bei der Schaufel 11 gemäß Figur 9 nicht um die Schaufel 11 gemäß Figur 1 handelt.

Der Figur 8 kann man die Ausrichtung des Winkels ϑ entnehmen, der von der Normalen n auf der Oberfläche 23 der Schaufel 11 abweicht. Der Anstellwinkel ϑ macht in der Schnittebene von Figur 8 in der Nähe von der Schaufelkante 16 insofern Sinn, dass die Mikrokanäle 25 in diesem Bereich ebenfalls von der Kanalstruktur 36 abgehen müssen, die jedoch genauso wie der Versorgungskanal 17 nicht ganz bis an die radial äußere Schaufelkante 16 herangeführt werden kann. Um einen Kühlfilm möglichst nahe an die radial äußere Schaufelkante 16 heranzubringen, ist es daher von Vorteil, durch einen Anstellwinkel ϑ die Öffnungen 24 der Mikrokanäle 25 möglichst nah an diese radial äußere Schaufelkante heranzuführen.

Der Figur 8 ist außerdem ein Aufbau der Wandstruktur 28, der Stützstruktur 33, der Siebstruktur 32 und des Versorgungskanals 17 zu entnehmen, bei dem Querschnittssprünge des durch alle diese Strukturen gebildeten Kanalsystems vermieden werden. Man kann erkennen, wie sich die Sieböffnungen 38 ohne Querschnittssprünge in die Kanalstruktur 36 der Stützstruktur 33 öffnen. Auch ein Übergang dieser Kanalstruktur 36 in die Mikrokanäle 25 erfolgt mit gleitenden Querschnittsübergängen. Genauso wird dies für die Verstrebung 31 erreicht, welche in den Versorgungskanal 17 zu dessen Stabilisierung hineinreicht.

Die Streben 34 und Knoten 35 der Stützstruktur 33 sind in Figur 8 schematisch im Schnitt dargestellt. Da es sich bei den Streben 34 um stangenartige Gebildet handelt, ist eine Umströmung dieser Streben vor und hinter der Zeichenebene ohne Weiteres möglich. Der Eindruck gemäß Figur 8, dass die Kanalstruktur 36 aus einzelnen nicht fluidisch miteinander verbundenen Zellen bestehe, täuscht also. Eine Verbindung zwischen den Sieböffnungen 38 und den Mikrokanälen 25 ist daher gewährleistet.

## Patentansprüche

1. Schaufel für eine Strömungskraftmaschine, aufweisend einen Innenraum (29), der von einer die Oberfläche (23) der Schaufel bildenden Wandstruktur (28) umgeben ist, wobei Öffnungen (24) in der Wandstruktur (28) vorgesehen sind, die die Oberfläche (23) mit dem Innenraum (29) verbinden,, wobei
• die Öffnungen (24) in der Wandstruktur (28) durch eine Vielzahl von Mikrokanälen (25) gebildet werden,
• die Mikrokanäle (25) über einen Flächenbereich (26a, 26b, 26c) der Oberfläche (23) verteilt sind,
**dadurch gekennzeichnet,**
**dass**
• sich die Mikrokanäle (25) jeweils einzeln von dem Innenraum zur Oberfläche erstrecken, derart, dass
• die Mikrokanäle (25) jeweils eine Wegstrecke bilden, die für strömendes Kühlgas eine geradlinige Richtung vorgibt.

2. Schaufel nach Anspruch 1,
**dadurch gekennzeichnet,**
**dass** die Mikrokanäle (25) in Bezug auf eine Normale n der Oberfläche (23) mit variierenden Anstellwinkeln ϕ, gemessen im Schaufelquerschnitt, und/oder mit variablen Anstellwinkeln ϑ, gemessen in Längsausrichtung der Schaufel, ausgerichtet sind.

3. Schaufel nach Anspruch 2,
**dadurch gekennzeichnet,**
**dass** die Mikrokanäle (25) einen umso kleineren Winkel ϕ aufweisen, je größer der Auftreffwinkel β einer Strömung in der Strömungskraftmaschine auf die Oberfläche (23) der Schaufel ist.

4. Schaufel nach einem der voranstehenden Ansprüche,
**dadurch gekennzeichnet,**
**dass** die Wandstärke der Wandstruktur (28) variiert.

5. Schaufel nach Anspruch 4,
**dadurch gekennzeichnet,**
**dass** die Wandstärke der Wandstruktur (28) umso dünner ist, je größer der Auftreffwinkel β einer Strömung in der Strömungskraftmaschine auf die Oberfläche (23) der Schaufel ist.

6. Schaufel nach einem der voranstehenden Ansprüche,
**dadurch gekennzeichnet,**
**dass** der Abstand a der Öffnungen (24) zu benachbarten Öffnungen (24) in dem Flächenbereich (26a, 26b, 26c) variiert.

7. Schaufel nach Anspruch 6,
**dadurch gekennzeichnet,**
**dass** der Abstand a umso kleiner ist, je größer der Auftreffwinkel β einer Strömung in der Strömungskraftmaschine auf die Oberfläche (23) der Schaufel ist.

8. Schaufel nach einem der voranstehenden Ansprüche,
**dadurch gekennzeichnet,**
**dass** im Innenraum (29) der Schaufel eine Stützstruktur (33) vorgesehen ist, die mechanisch an die Wandstruktur (28) angebunden ist und die ein Kanalsystem (36) aufweist, durch welches die an die Stützstruktur (33) angrenzenden Mikrokänäle (25) zugänglich sind, wobei das Kanalsystem einen geringeren Strömungswiderstand aufweist, als die an die Stützstruktur (33) angrenzenden Mikrokanäle.

9. Schaufel nach Anspruch 8,
**dadurch gekennzeichnet,**
**dass** die Stützstruktur (33) durch ein dreidimensionales Gitter gebildet ist.

10. Schaufel nach einem der Ansprüche 8 oder 9,
**dadurch gekennzeichnet,**
**dass** die Stützstruktur (33) in ihrem Inneren einen Versorgungskanal (17) für Kühlgas aufweist, wobei der Versorgungskanal einen geringeren Strömungswiderstand aufweist, als die Stützstruktur.

11. Schaufel nach Anspruch 10,
**dadurch gekennzeichnet,**
**dass** der Versorgungskanal (17) von der Stützstruktur (33) durch eine Siebstruktur (32) abgetrennt ist.

12. Schaufel nach Anspruch 11,
**dadurch gekennzeichnet,**
**dass** Sieböffnungen (38) in der Siebstruktur einen Querschnitt aufweisen, der höchstens so groß ist, wie derjenige der Mikrokanäle (25).

13. Schaufel nach einem der Ansprüche 1 bis 12,
**dadurch gekennzeichnet,**
**dass** der Versorgungskanal (17) mit einer Auslassöffnung (19) verbunden ist, der zur Oberfläche (23) der Schaufel führt.

14. Schaufel nach Anspruch 13,
**dadurch gekennzeichnet,**
**dass** die Auslassöffnung (19) in der Oberfläche (23) der Schaufel auf einer Saugseite der Schaufel oder in der stromabwärtigen Kante der Schaufel liegt.

15. Schaufel nach einem der Ansprüche 10 bis 14,
**dadurch gekennzeichnet,**
**dass** der Versorgungskanal (17) im Querschnitt eine gewellte oder mäandernde Kontur aufweist.

16. Schaufel nach einem der Ansprüche 14 bis 15,
**dadurch gekennzeichnet,**
**dass** der Gesamtquerschnitt der Sieböffnungen (38) mindestens so groß ist, wie der Gesamtquerschnitt der Mikrokanäle (25)

17. Schaufel nach einem der Ansprüche 8 bis 16,
**dadurch gekennzeichnet,**
**dass** die Übergänge von der Stützstruktur (33) in die Wandstruktur (28) und/oder in die Siebstruktur (32) fließend ausgebildet sind.

18. Schaufel nach einem der Ansprüche 10 bis 17,
**dadurch gekennzeichnet,**
**dass** sich der Querschnitt des Versorgungskanals (17) von einem Schaufelfuß ausgehend nach radial außen vergrößert.

19. Schaufel nach einem der Ansprüche 10 bis 18,
**dadurch gekennzeichnet,**
**dass** in dem Versorgungskanal (17) Verstrebungen (31) vorhanden sind.

20. Schaufel nach einem der Ansprüche 10 bis 19,
**dadurch gekennzeichnet,**
**dass** in den Versorgungkanal (17) ein Zyklon-Abscheider (20) für das Kühlgas integriert ist.

21. Verfahren zum additiven Herstellen eines Bauteils,
**dadurch gekennzeichnet,**
**dass** ein Bauteil gemäß einem der voranstehenden Ansprüche hergestellt wird.

## Claims

1. Blade for a turbomachine, having an interior space (29) which is surrounded by a wall structure (28) which forms the surface (23) of the blade, wherein openings (24) are provided in the wall structure (28), which openings connect the surface (23) to the interior space (29), wherein
• the openings (24) in the wall structure (28) are formed by means of a multiplicity of micro-channels (25),
• the micro-channels (25) are distributed over an area region (26a, 26b, 26c) of the surface (23),
**characterized**
**in that**,
• the micro-channels (25) each individually extend from the interior space to the surface, in such a manner that
• the micro-channels (25) each form a path which predefines a rectilinear direction for flowing cooling gas.

2. Blade according to Claim 1,
**characterized**
**in that** the micro-channels (25) are, in relation to a normal n to the surface (23), oriented with varying angles of inclination ϕ, measured in the blade cross section, and/or with variable angles of inclination ϑ, measured in the longitudinal orientation of the blade.

3. Blade according to Claim 2,
**characterized**
**in that** the micro-channels (25) have a smaller angle ϕ the larger the impingement angle β of a flow in the turbomachine onto the surface (23) of the blade.

4. Blade according to one of the preceding claims,
**characterized**
**in that** the wall thickness of the wall structure (28) varies.

5. Blade according to Claim 4,
**characterized**
**in that** the wall thickness of the wall structure (28) is thinner the larger the impingement angle β of a flow in the turbomachine onto the surface (23) of the blade.

6. Blade according to one of the preceding claims,
**characterized**
**in that** the spacing a of the openings (24) to adjacent openings (24) in the area region (26a, 26b, 26c) varies.

7. Blade according to Claim 6,
**characterized**
**in that** the spacing a is smaller the larger the impingement angle β of a flow in the turbomachine onto the surface (23) of the blade.

8. Blade according to one of the preceding claims,
**characterized**
**in that**, in the interior space (29) of the blade, there is provided a support structure (33) which is mechanically connected to the wall structure (28) and which has a channel system (36) through which the micro-channels (25) adjoining the support structure (33) are accessible, wherein the channel system has a lower flow resistance than the micro-channels adjoining the support structure (33).

9. Blade according to claim 8,
**characterized**
**in that** the support structure (33) is formed by a three-dimensional lattice.

10. Blade according to either of Claims 8 and 9,
**characterized**
**in that** the support structure (33) has, in its interior, a supply channel (17) for cooling gas, wherein the supply channel has a lower flow resistance than the support structure.

11. Blade according to Claim 10,
**characterized**
**in that** the supply channel (17) is separated from the support structure (33) by a screen structure (32).

12. Blade according to Claim 11,
**characterized**
**in that** screen openings (38) in the screen structure have a cross section which is at most as large as that of the micro-channels (25) .

13. Blade according to one of Claims 1 to 12,
**characterized**
**in that** the supply channel (17) is connected to an outlet opening (19) which leads to the surface (23) of the blade.

14. Blade according to Claim 13,
**characterized**
**in that** the outlet opening (19) in the surface (23) of the blade is situated on a suction side of the blade or in the trailing edge of the blade.

15. Blade according to one of Claims 10 to 14,
**characterized**
**in that** the supply channel (17) has an undulating or meandering contour in cross section.

16. Blade according to one of Claims 14 to 15,
**characterized**
**in that** the total cross section of the screen openings (38) is at least as large as the total cross section of the micro-channels (25).

17. Blade according to one of Claims 8 to 16,
**characterized**
**in that** the transitions from the support structure (33) into the wall structure (28) and/or into the screen structure (32) are of flowing form.

18. Blade according to one of Claims 10 to 17,
**characterized**
**in that** the cross section of the supply channel (17) increases in a radially outward direction proceeding from a blade root.

19. Blade according to one of Claims 10 to 18,
**characterized**
**in that** strut arrangements (31) are provided in the supply channel (17).

20. Blade according to one of Claims 10 to 19,
**characterized**
**in that** a cyclone separator (20) for the cooling gas is integrated into the supply channel (17).

21. Method for the additive production of a component,
**characterized**
**in that** a component according to one of the preceding claims is produced.

## Revendications

1. Aube d'une turbomachine, comportant un espace (29) intérieur, qui est entouré d'une structure (28) de paroi formant la surface (23) de l'aube, dans laquelle il est prévu, dans la structure (28) de paroi, des ouvertures (24), qui relient la surface (23) à l'espace (29) intérieur, dans laquelle
• les ouvertures (24) dans la structure (28) de paroi sont formées par une pluralité de micro-conduits (25),
• les micro-conduits (25) sont répartis sur une partie (26a, 26b, 26c) de la surface (23),
**caractérisée en ce que**
• les micro-conduits (25) s'étendent chacun individuellement de l'espace intérieur à la surface, de manière à ce que
• les micro-conduits (25) forment chacun un parcours, qui prescrit une direction en ligne droite au gaz de refroidissement en écoulement.

2. Aube suivant la revendication 1,
**caractérisée**
**en ce que** les micro-conduits (25) sont dirigés par rapport à une normale n à la surface (23), en ayant des angles ϕ d'incidences variables mesurés suivant la section transversale de l'aube et/ou en ayant des angles *ϑ* d'incidences variables mesurés dans la direction longitudinale de l'aube.

3. Aube suivant la revendication 2,
**caractérisée**
**en ce que** les micro-conduits (25) ont un angle ϕ d'autant plus petit que l'angle β d'incidence d'un courant dans la turbomachine sur la surface (23) de l'aube est plus grand.

4. Aube suivant l'une des revendications précédentes,
**caractérisée**
**en ce que** l'épaisseur de paroi de la structure (28) de paroi varie.

5. Aube suivant la revendication 4,
**caractérisée**
**en ce que** l'épaisseur de paroi de la structure (28) de paroi est d'autant plus mince que l'angle β d'incidence d'un courant dans la turbomachine sur la surface (23) de l'aube est plus grand.

6. Aube suivant l'une des revendications précédentes,
**caractérisée**
**en ce que** la distance a des ouvertures (24) à des ouvertures (24) voisines varie dans la partie (26a, 26b, 26c) de la surface.

7. Aube suivant la revendication 6,
**caractérisée**
**en ce que** la distance a est d'autant plus petite que l'angle β d'incidence d'un courant dans la turbomachine sur la surface (23) de l'aube est plus grand.

8. Aube suivant l'une des revendications précédentes,
**caractérisée**
**en ce qu'**il est prévu, dans l'espace (29) intérieur de l'aube, une structure (33) d'appui, qui est liée mécaniquement à la structure (28) de paroi et qui a un système (36) de conduit, par lequel les micro-conduits (25) voisins de la structure (33) d'appui sont accessibles, le système de conduit ayant une résistance à l'écoulement plus petite que les micro-conduits (25) voisins de la structure (33) d'appui.

9. Aube suivant la revendication 8,
**caractérisée**
**en ce que** la structure (33) d'appui est formée d'une grille en trois dimensions.

10. Aube suivant l'une des revendications 8 ou 9,
**caractérisée**
**en ce que** la structure (33) d'appui a, à l'intérieur, un conduit (17) d'alimentation en gaz de refroidissement, le conduit d'alimentation ayant une résistance à l'écoulement plus petite que la structure d'appui.

11. Aube suivant la revendication 10,
**caractérisée**
**en ce que** le canal (17) d'alimentation est séparé de la structure (33) d'appui par une structure (32) de tamis.

12. Aube suivant la revendication 11,
**caractérisée**
**en ce que** les ouvertures (38) de tamis de la structure de tamis ont une section transversale, qui est au plus aussi grande que celle des micro-conduits (25).

13. Aube suivant l'une des revendications 1 à 12,
**caractérisée**
**en ce que** le conduit (17) d'alimentation communique avec une ouverture (19) de sortie, qui mène à la surface (23) de l'aube.

14. Aube suivant la revendication 13,
**caractérisée**
**en ce que** l'ouverture (19) de sortie se trouve dans la surface (23) de l'aube sur un extrados de l'aube ou dans le bord en aval de l'aube.

15. Aube suivant l'une des revendications 10 à 14,
**caractérisée**
**en ce que** le conduit (17) d'alimentation a, en section transversale, un contour ondulé ou sinueux.

16. Aube suivant l'une des revendications 14 à 15,
**caractérisée**
**en ce que** la section transversale totale des ouvertures (38) de tamis est au moins aussi grande que la section transversale totale des micro-conduits (25).

17. Aube suivant l'une des revendications 8 à 16,
**caractérisée**
**en ce que** les transitions de la structure (33) d'appui à la structure (28) de paroi et/ou à la structure (32) de tamis sont constituées de manière flottante.

18. Aube suivant l'une des revendications 10 à 17,
**caractérisée**
**en ce que** la section transversale du conduit (17) d'alimentation s'agrandit à partir d'une emplanture de l'aube vers l'extérieur radialement.

19. Aube suivant l'une des revendications 10 à 18,
**caractérisée**
**en ce qu'**il y a des entretoises (31) dans le conduit (17) d'alimentation.

20. Aube suivant l'une des revendications 10 à 19,
**caractérisée**
**en ce qu'**un séparateur (20) cyclone pour le gaz de refroidissement est intégré dans le conduit (17) d'alimentation.

21. Procédé de fabrication additive d'une pièce,
**caractérisé**
**en ce que** l'on produit une pièce suivant l'une des revendications précédentes.
